# EUROPEAN PATENT SPECIFICATION

(11) **EP 1 672 236 B1**
(45) Date of publication and mention of the grant of the patent: **20.01.2010**
(21) Application number: 05110911.4
(22) Date of filing: 18.11.2005
(51) Int. Cl.: F16D 48/00, B60K 23/00

(54) **Method for engaging/disengaging a power take-off**
Verfahren zum Ein- /Auskuppeln eines Nebenantriebs
Procédé d'engagement-dégagement d'une prise de puissance

(30) Priority: 15.12.2004 IT MI20042381
(43) Date of publication of application: 21.06.2006
(73) Proprietor: IVECO S.p.A., 10156 Torino (IT)
(72) Inventor: Avondo, Giovanna, 13011 Borgosesia (IT); Orlando, Daniele, 10129 Torino (IT)
(74) Representative: Borsano, Corrado

(56) References cited:
- EP-A- 0 517 384
- WO-A-2004/035344
- US-B1- 6 386 303

## Description

### SCOPE OF THE INVENTION

This invention relates to a method for engaging and disengaging a power take-off in a vehicle, and more particularly in an industrial vehicle, equipped with an automated stage-geared gearbox, and more specifically with a clutch power take-off.

### PRIOR ART

Industrial vehicles are often fitted with accessories for handling or processing materials, and other kinds of implements. Examples include cranes, hoisting gear, dumper trucks, cement mixers, suction or supply pumps for water-jet pipes, solid waste compactors and comminutors, compressors for refrigeration, snow-ploughs.

These are driven by the engine via a power take-off that may be installed on the driving shaft or downstream of the clutch in an appropriate position, for example on the transmission countershaft.

These accessories are often used when the vehicle is stationary, but in many cases it must also be possible to use the power take-off while the vehicle is moving, thus with the drive engaged, for example in case of a power take-off that is used with hydraulic retarders.

In the field of industrial vehicles widespread use is now made of automated stage-geared gearboxes, whereby the clutch is controlled and the gears are engaged and disengaged by means of a number of actuators that are electronically controlled, and the engine speed and torque are automatically controlled, for example by controlling fuel injection.

With this type of gearbox the driver is no longer directly in control of the clutch, which means that an electronic system must control a series of conditions to prevent the engagement or disengagement of the power take-off. There is thus the need to have good control of the power take-off, both with the vehicle stationary and also when running, and to achieve a good level of integration between the gearbox control system and the power take-off control system, so that the equipment responds promptly to a simple command sent by the driver, regardless of the running or operating condition of the vehicle.

WO 2004/035344 discloses a method for engaging or disengaging a power take-off according to the preamble of claim 1.

### SUMMARY OF THE INVENTION

The problems described above have now been solved with a method for engaging/disengaging the power take-off in a vehicle, and more particularly in an industrial vehicle according to the attached independent claim 1.

The invention also relates to a system controlling a power take-off and an automated stage-geared gearbox for a vehicle according to claim 10.

Preferred aspects of the invention are set out in the attached dependent claims.

This invention relates in particular to that set forth in the claims attached hereto

### LIST OF DRAWINGS

This invention will now be illustrated through a detailed description of the preferred but not exclusive embodiments, furnished merely by way of example, with the aid of the drawings attached, of which:
figure 1 is a schematic diagram of an onboard control system for an industrial vehicle that implements the method according to this invention;
figure 2 is a schematic timing diagram showing the various operations that are performed during the execution of a method for engaging a power take-off, according to this invention;
figure 3 is a schematic timing diagram showing the various operations that are performed during the execution of a method for engaging a power take-off, in the event of failure of the procedure, according to this invention;
figure 4 is a schematic timing diagram showing the various operations that are performed during the execution of a method for disengaging a power take-off, according to this invention;
figure 5 is a schematic timing diagram showing the various operations that are performed during the execution of a method for disengaging a power take-off, in the event of failure of the procedure, according to this invention;

### DETAILED DESCRIPTION OF AN EMBODIMENT

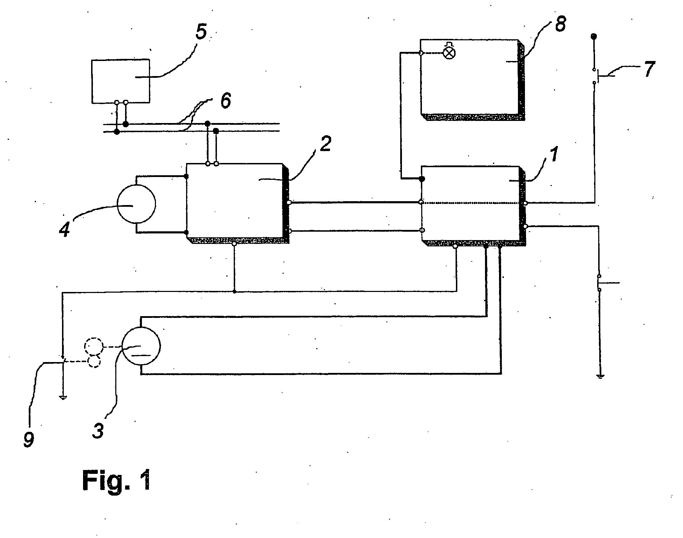

Figure 1 is a schematic diagram of a system according to a preferred aspect of this invention; this system is suitable for installation in an industrial vehicle and manages the various actuating devices of an automated stage-geared gearbox of a type known in the prior art, including the clutch that may be of the electromagnetic type or of any suitable type, and the power take-off actuating devices. According to a preferred aspect of the invention, it also controls the power delivered by the engine, for example by controlling the fuel injection system. The engine of the vehicle may be of a known type, preferably a diesel engine of an appropriate type.

The system comprises a device 1 that electronically controls the power take-off, by means of a power take-off actuator 3, i.e. a device that actuates a clutch mechanism between the power take-off and a transmission to a user, for coupling and uncoupling. The clutch may be of a type known in the prior art, for example a friction clutch or a claw clutch. The system comprises an electronic unit 2 that controls the gearbox and is also capable of operating the clutch 4 of the vehicle's transmission system. There is an electronic engine control module 5, capable of measuring and controlling the torque and rotational speed of the engine, also on the basis of specific requests by other system components, for example by the gearbox control unit 2. In accordance with one aspect of the invention, the control module may exchange data with said unit via the common line 6 (bus). There may be a control element 7, for example a simple key, that can be operated by the driver, capable of sending a request signal to engage or disengage the power take-off to the control device 1. The command may also be sent automatically, by a control element of the equipment driven via the power take-off. A control panel 8 may be connected to the system, to provide the driver with information about the status of the various devices, for example the engagement of the power take-off. A specific sensor element 9, for example an ordinary switch, is used to generate a signal that is capable of providing the other control elements with information relating to the engaged or disengaged status of the power take-off. The device 1 is capable of sending a signal to the unit 2 requesting to engage or disengage the power take-off and the unit 2 is capable of generating a signal to enable the engagement of the power take-off.

The various control elements may be chosen from among the electronic equipment of the type known in the prior art according to the specific requirements. These are described here as separate entities, but may also be integrated into a single apparatus, if deemed preferable; for example, the device 1 and the unit 2 may be integrated.

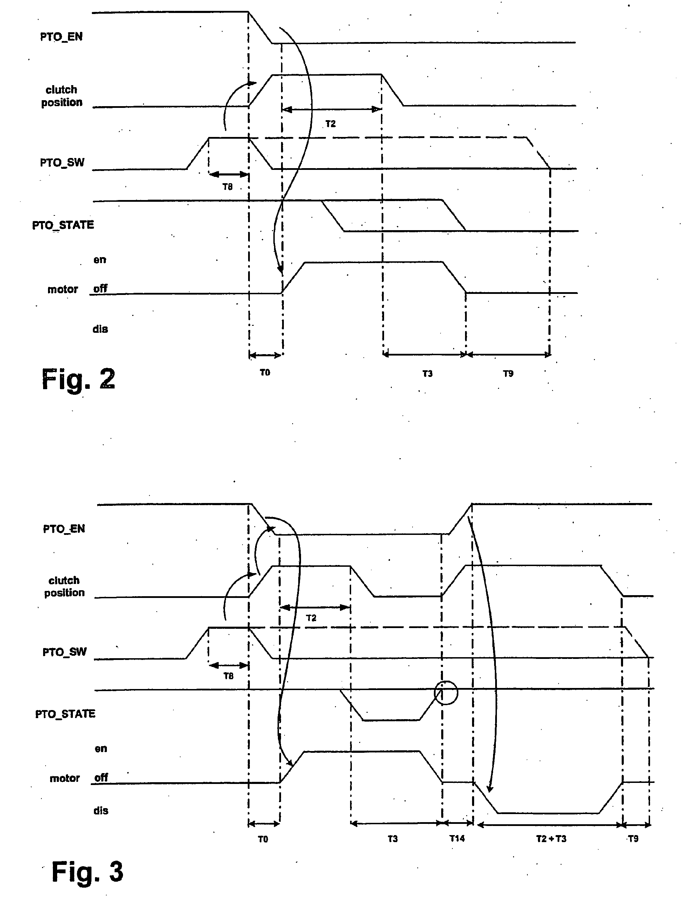

According to one aspect of the invention a method for engaging the power take-off may be carried out as follows. With reference to the timing diagram in figures 2 and 3, the line PTO EN represents a signal to enable the engagement of the power take-off, generated by the gearbox control unit 2, of an appropriate type. The highest level corresponds to a signal to prevent the engagement of the power take-off, that prevents the device 1 from executing the engagement, the lowest level corresponds to an enable signal (for example there may be two voltages, one that corresponds to the voltage of the vehicle's battery, the other to the mass, when an appropriate circuit has been closed). Clutch position indicates the status of the clutch of the vehicle's transmission 4, engaged (low level) or open (high level). PTO SW corresponds to the signal to request (high level) the engagement or disengagement of the power take-off generated by the driver and transmitted by the device 1 to the unit 2, or to the no request signal (low level). PTO STATE corresponds to the status of the power take-off, engaged (low level) or disengaged (high level). The motor line corresponds to the operating status of the actuator 3, where the medium level (off) corresponds to inactivity, the highest level (en) corresponds to the power take-off engagement operation, the lowest level (dis) corresponds to the disengagement operation.

The gearbox control unit 2 maintains the disable signal PTO EN to disable the engagement of the power take-off, until a request is sent (PTO SW signal for a time interval T8 or more, where T8 is a predefined value, for example 500 ms): in that case the unit 2 verifies a series of conditions that must be present for engagement and, if these are present, it opens the clutch (by means of an appropriate actuator), checks the engine torque by means of the control module 5 (for that purpose it may generate a message according to EOL parameters) and generates the enable signal PTO EN, which enables engagement by the unit 2. If any conditions are not satisfied, the unit 2 merely generates an error signal for the driver. If it receives the enable signal within a predefined time interval T0 (for example between 200 ms and 2 s), after receiving the request from the driver, the device 1 activates the actuator 3 (otherwise it does not execute the engagement and generates an appropriate error signal for the driver); after a time interval T2 (for example 1.25 s) the unit 2 closes the clutch and checks after another time interval T3 (for example 1 s) after the generation of the signal PTO STATE, by the sensor element 9, that the power take-off is engaged, otherwise (figure 3) it opens the clutch again and generates the prevention signal PTO EN, that causes the device 1 terminate the engagement operations.

Preferably, the unit 2 generates a specific signal to control the engine torque by means of the control module 5 while the power take-off is engaged, so as to prevent gear shifting.

Further controls are possible, for example, if the request signal PTO SW is still present after a time interval T9 (dotted lines) once the time interval T3 has elapsed, this is treated as a jammed condition, and the device 1 starts the disengagement procedure described below and generates an error message. In that case no further engagements are allowed until after a reset procedure.

In the event of failure of the engagement procedure (see fig. 3) the device 1 checks that the disable signal PTO EN is generated within a time interval T14 (for example 2 s) after the time interval T3 has elapsed, otherwise this denotes a malfunction that is signalled by means of a specific message.

Once a failed engagement procedure has been concluded, a new attempt can be made at the request of the driver, except in specifically defined cases.

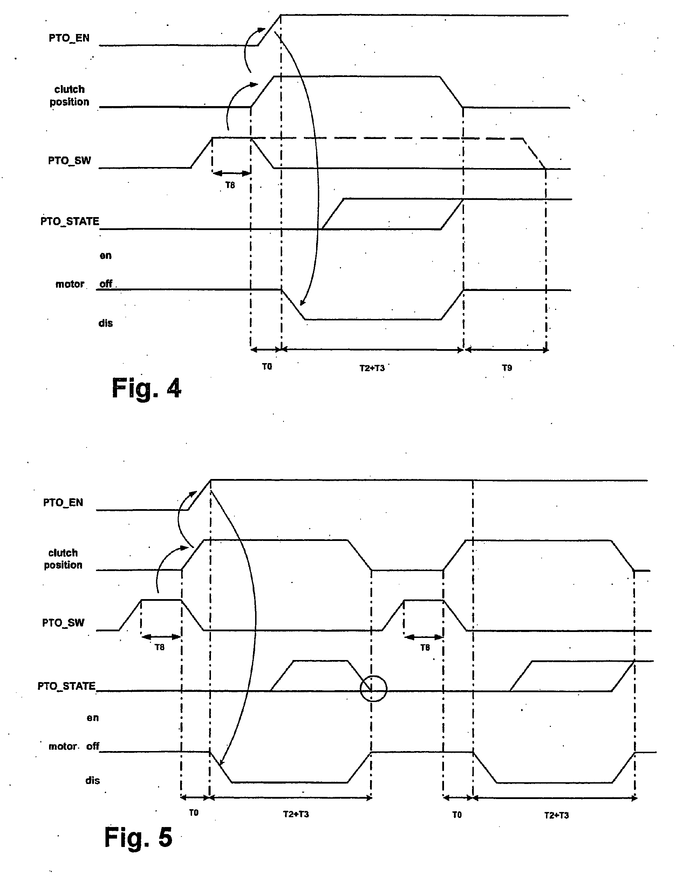

Figures 4 and 5 illustrate the timing sequence of the operations during the execution of a method for disengaging the power take-off according to this invention. Figure 5 illustrates the case of failure of the first attempt to disengage.

When the power take-off is engaged, the gearbox control unit 2 maintains the enable signal PTO EN. In case of a request generated by the driver, which may consist of a signal PTO SW the same as that described for the request to engage, the unit 2 opens the clutch and generates the disable signal PTO EN that causes the control device 1 to start the disengagement procedure, by activating the actuator 3; the clutch remains open for an appropriate time interval, for example T2+T3, where T2 and T3 have the meanings described above. If after a predefined time interval, that may be, for example, equal to T0, the signal PTO EN has not been set to the disable value, the device 1 proceeds with disengagement in any case and generates an error message for the driver.

If, after a predefined time interval, which may correspond to the clutch opening time, the power take-off is engaged (figure 5), another request PTO SW must be sent to make another attempt. A control process the same as that performed in the engagement procedure may be carried out to detect any possible jamming of the command to request engagement/disengagement. If this condition is present, the power take-off is disengaged or left disengaged in any case, but an error message is generated and a new engagement is not allowed until after a reset procedure.

As described earlier, the unit 2 is capable of verifying, when requested, a series of conditions that prevent the engagement of the power take-off. Another function of said unit is to detect, when the power take-off is engaged, the presence of conditions under which forced disengagement is necessary. Said detection may be performed in a way known in the prior art. If one of said conditions is present, the unit 2 starts a disengagement procedure as described above, except that this takes place in the absence of a request PTO SW. The conditions for forced disengagement can always be detected, at least when the power take-off is engaged, for example at fixed intervals of time, in order to guarantee disengagement should these conditions arise.

The error messages may result in a series of light signals or other types of signals for the driver, for example an indicator lamp on the panel 8 may flash or light up.

The method and the system according to this invention are particularly suitable for a clutch power take-off. According to a preferred aspect, the system makes sure that the gear is in neutral during engagement. Furthermore, the system is suitable for use in the stationary condition (vehicle at a standstill), and when the vehicle is moving. In the latter case the gearbox control unit preferably prevents further gear shifts when the power take-off is engaged.

In case of operation with the vehicle stationary, the engine can be controlled so as to adjust and increase the torque as required to operate the power take-off and the machinery driven thereby.

The invention also relates to a system controlling a power take-off and an automated stage-geared gearbox for a vehicle equipped with means carrying out the operations described above.

The invention also relates to a vehicle equipped with said system.

Said means may comprise devices, as well as programs that can be run on a computer, such as the systems and control devices described above.

The invention also relates to a computer program carrying out the method according to this invention, when run on a computer system such as may be regarded the system described above.

The novel part of the program may be added as an integration or modification to an existing program used to carry out the control functions known in the prior art, for example those included in a known system for controlling the gearbox or power take-off.

From the description set forth above it will be possible for the person skilled in the art to embody said software using the ordinary programming techniques known in the prior art.

## Claims

1. Method of controlling a power take-off in a vehicle equipped with an automated stage-geared gearbox, wherein it comprises the following steps, for engaging said power take-off:
receipt of a request to engage signal (PTO SW) by a unit (2) that controls said gearbox and a device (1) that controls said power take-off:
opening of the clutch (4) of the vehicle's transmission and generation of an enable signal (PTO EN) by said unit;
receipt of the enable signal by said device (1) and activation thereby of a specific actuator to engage the power take-off;
closing, by said unit (2), of the clutch (4) when an appropriate time interval has elapsed after opening, and the method being **characterised in that** said unit (2) prevents gear shifting when the power take-off is engaged;
and further comprising, when an appropriate time interval (T2) has elapsed after the closing of the clutch (4), the verification of engagement (PTO STATE) by said unit (2) and, if engagement has not occurred, the following additional steps:
opening of the clutch (4) of the vehicle's transmission and generation of a disable signal (PTO EN) by said unit;
receipt of the disable signal (PTO EN) by said device (1) and activation thereby of a specific actuator (3) to disengage the power take-off:
closing of the clutch (4) by said unit (2) when an appropriate time interval has elapsed after opening.

2. Method according to claim 1 **characterized in that** in the engaging steps said unit verifies the absence of a series of predefined conditions that prevent engagement and opens the clutch (4) and generates said enable signal (PTO EN) if said conditions are not present.

3. Method according to any of the previous claims, **characterized in that** in the engaging steps said request signal (PTO SW) is received by said device (1) and sent by said device (1) to said unit (2).

4. Method according to any of the previous claims, **characterized in that** in the engaging steps it comprises the control by said unit (2) and by means of an electronic engine control module (5), of the engine torque during engagement.

5. Method according to claim 1 further **characterized in that** it comprises the following steps for disengaging said drive-engaged power take-off, after engagement:
opening of said clutch (4) of the vehicle's transmission and generation of a disable signal (PTO EN) by said unit (2) that controls said gearbox;
receipt of the disable signal by said device (1) that controls said power take-off and activation by said device (1) of said specific actuator (3) to disengage the power take-off;
closing, by said unit (2), of the clutch (4) when an appropriate time interval (T2) has elapsed after opening.

6. Method according to claim 5, **characterized in that** in the disengaging steps it comprises the receipt of a request to disengage signal (PTO SW) by said unit (2) and said device (1) before the clutch (4) is opened and the generation of the disable signal (PTO EN) by said unit (2).

7. Method according to claim 5, **characterized in that** in the disengaging steps it comprises the verification, by said unit (2), of the presence of at least one predefined condition for forced disengagement, before the clutch (4) is opened and the disable signal (PTO EN) is generated.

8. Method according to claims 6 or 7, **characterized in that** in the disengaging steps it comprises the control, when an appropriate time interval (T9) has elapsed after the engagement or disengagement of the power take-off, of a jammed condition in the generation of the request signal (PTO SW) and, if said condition is present, the prevention of any further engagement of the power take-off until after a reset procedure.

9. Method according to claim 8, comprising, in the disengaging steps, if said jammed condition is present, the disengagement of the power take-off.

10. System controlling a power take-off and an automated stage-geared gearbox for a vehicle, comprising means implementating the method of any of the preceding claims.

11. Vehicle equipped with a system according to claim 10.

12. Computer program carrying out the method according to any of the claims from 1 to 9, when run on a computer.

## Patentansprüche

1. Verfahren zum Steuern eines Nebenantriebs in einem Fahrzeug, das mit einem automatischen Stufenganggetriebe ausgerüstet ist, wobei es die folgenden Schritte zum Einkuppeln des Nebenantriebs umfasst:
Empfangen eines Einkupplungs-Anfragesignals (PTO SW) durch eine Einheit (2), die das Getriebe steuert, und eine Vorrichtung (1), die den Nebenantrieb steuert;
Öffnen der Kupplung (4) der Übersetzung des Fahrzeugs und Erzeugen eines Einkupplungssignals (PTO EN) durch die Einheit;
Empfangen des Einkupplungssignals durch die Vorrichtung (1) und **dadurch** Aktivieren eines spezifischen Aktors, um den Nebenantrieb einzukuppeln;
Schließen der Kupplung (4) durch die Einheit (2), wenn ein geeignetes Zeitintervall nach dem Öffnen abgelaufen ist, und wobei das Verfahren **dadurch gekennzeichnet ist, dass** die Einheit (2) ein Gangschalten verhindert, wenn der Nebenantrieb eingekuppelt ist;
und ferner umfassend, wenn ein geeignetes Zeitintervall (T2) nach dem Schließen der Kupplung (4) verstrichen ist, das Verifizieren des Einkuppelns (PTO STATE) durch die Einheit (2) und, wenn ein Einkuppeln nicht stattgefunden hat, die folgenden zusätzlichen Schritte:
Öffnen der Kupplung (4) der Übersetzung des Fahrzeugs und Erzeugen eines Deaktivierungssignals (PTO EN) durch die Einheit;
Empfangen des Deaktivierungssignals (PTO EN) durch die Vorrichtung (1) und **dadurch** Aktivieren eines spezifischen Aktors (3), um den Nebenantrieb auszukuppeln;
Schließen der Kupplung (4) durch die Einheit (2), wenn ein geeignetes Zeitintervall nach dem Öffnen verstrichen ist.

2. Verfahren nach Anspruch 1, **dadurch gekennzeichnet, dass** die Einheit bei den Einkupplungsschritten das Fehlen einer Reihe vorbestimmter Bedingungen verifiziert, die ein Einkuppeln verhindern, und die Kupplung (4) öffnet und das Aktivierungssignal (PTO EN) erzeugt, wenn die Bedingungen nicht vorliegen.

3. Verfahren nach einem der vorgehenden Ansprüche, **dadurch gekennzeichnet, dass** in den Einkupplungsschritten das Anfragesignal (PTO SW) durch die Vorrichtung (1) empfangen und durch die Vorrichtung (1) an die Einheit (2) gesandt wird.

4. Verfahren nach einem der vorgehenden Ansprüche, **dadurch gekennzeichnet, dass** es bei den Einkupplungsschritten das Steuern des Motordrehmoments während des Einkuppelns durch die Einheit (2) und durch ein elektronisches Motorsteuerungsmodul (5) umfasst.

5. Verfahren nach Anspruch 1, ferner **dadurch gekennzeichnet, dass** es die folgenden Schritte zum Auskuppeln des angetrieben eingekuppelten Nebenantriebs nach dem Einkuppeln umfasst:
Öffnen der Kupplung (4) der Übersetzung des Fahrzeugs und Erzeugen eines Deaktivierungssignals (PTO EN) durch die Einheit (2), die das Getriebe steuert;
Empfangen des Deaktivierungssignals durch die Vorrichtung (1), die den Nebenantrieb steuert, und Aktivieren des spezifischen Aktors (3) durch die Vorrichtung (1), um den Nebenantrieb auszukuppeln;
Schließen der Kupplung (4) durch die Einheit (2), wenn ein geeignetes Zeitintervall (T2) nach dem Öffnen verstrichen ist.

6. Verfahren nach Anspruch 5, **dadurch gekennzeichnet, dass** es bei den Auskupplungsschritten das Empfangen eines Auskupplungs-Anfragesignals (PTO SW) durch die Einheit (2) und die Vorrichtung (1), bevor die Kupplung (4) geöffnet wird, und das Erzeugen des Deaktivierungssignals (PTO EN) durch die Einheit (2) umfasst.

7. Verfahren nach Anspruch 5, **dadurch gekennzeichnet, dass** es bei den Auskupplungsschritten das Verifizieren des Vorliegens zumindest eines vorbestimmten Zustands für ein erzwungenes Auskuppeln umfasst, bevor die Kupplung (4) geöffnet und das Deaktivierungssignal (PTO EN) erzeugt wird.

8. Verfahren nach Anspruch 6 oder 7, **dadurch gekennzeichnet, dass** es in den Auskupplungsschritten das Steuern einer blockierten Bedingung beim Erzeugen des Anfragesignals (PTO SW), wenn ein geeignetes Zeitintervall (T9) nach dem Einkuppeln oder Auskuppeln des Nebenantriebs verstrichen ist, und, wenn die Bedingung vorliegt, das Verhindern jedes weiteren Einkuppelns des Nebenantriebs bis nach einem Zurücksetzverfahren umfasst.

9. Verfahren nach Anspruch 8, das in den Auskupplungsschritten das Auskuppeln des Nebenantriebs umfasst, wenn die blockierte Bedingung vorliegt.

10. System, das einen Nebenantrieb und ein automatisches Stufenganggetriebe für ein Fahrzeug steuert, umfassend Mittel, die das Verfahren nach einem der vorgehenden Ansprüche implementieren.

11. Fahrzeug, das mit einem System nach Anspruch 10 ausgerüstet ist.

12. Computerprogramm, welches das Verfahren nach einem der Ansprüche 1 bis 9 ausführt, wenn es auf einem Computer betrieben wird.

## Revendications

1. Procédé de commande d'une prise de force dans un véhicule équipé d'une boîte de vitesses automatique à engrenages étagés, dans lequel il comprend les étapes suivantes, pour engager ladite prise de force :
réception d'un signal de demande d'engagement (PTO SW) par une unité (2) qui commande ladite boîte de vitesses et un dispositif (1) qui commande ladite prise de force ;
ouverture de l'embrayage (4) de la transmission du véhicule et génération d'un signal de validation (PTO EN) par ladite unité ;
réception du signal de validation par ledit dispositif (1) et activation de ce fait d'un actionneur spécifique pour engager la prise de force ;
fermeture, par ladite unité (2), de l'embrayage (4) lorsqu'un intervalle de temps approprié s'est écoulé après l'ouverture, et le procédé étant **caractérisé en ce que** ladite unité (2) empêche le changement de vitesse lorsque la prise de force est engagée ;
et comprenant en outre, lorsqu'un intervalle de temps approprié (T2) s'est écoulé après la fermeture de l'embrayage (4), la vérification d'engagement (PTO STATE) par ladite unité (2) et, si l'engagement ne s'est pas produit, les étapes additionnelles suivantes :
ouverture de l'embrayage (4) de la transmission du véhicule et génération d'un signal d'invalidation (PTO EN) par ladite unité ;
réception du signal d'invalidation (PTO EN) par ledit dispositif (1) et activation de ce fait d'un actionneur spécifique (3) pour désengager la prise de force ;
fermeture de l'embrayage (4) par ladite unité (2) lorsqu'un intervalle de temps approprié s'est écoulé après l'ouverture.

2. Procédé selon la revendication 1, **caractérisé en ce que** lors des étapes d'engagement, ladite unité vérifie l'absence d'une série de conditions prédéfinies qui empêchent l'engagement et ouvre l'embrayage (4) et génère ledit signal de validation (PTO EN) si lesdites conditions ne sont pas présentes.

3. Procédé selon l'une quelconque des revendications précédentes, **caractérisé en ce que** lors des étapes d'engagement, ledit signal de demande (PTO SW) est reçu par ledit dispositif (1) et envoyé par ledit dispositif (1) à ladite unité (2).

4. Procédé selon l'une quelconque des revendications précédentes, **caractérisé en ce que** lors des étapes d'engagement, il comprend la commande par ladite unité (2) et au moyen d'un module de commande électronique moteur (5), du couple moteur pendant l'engagement.

5. Procédé selon la revendication 1, **caractérisé en outre en ce qu'**il comprend les étapes suivantes pour désengager ladite prise de force à entraînement engagé, après l'engagement :
ouverture dudit embrayage (4) de la transmission du véhicule et génération d'un signal d'invalidation (PTO EN) par ladite unité (2) qui commande ladite boîte de vitesses ;
réception du signal d'invalidation par ledit dispositif (1) qui commande ladite prise de force et activation par ledit dispositif (1) dudit actionneur spécifique (3) pour désengager la prise de force ;
fermeture, par ladite unité (2), de l'embrayage (4) lorsqu'un intervalle de temps approprié (T2) s'est écoulé après l'ouverture.

6. Procédé selon la revendication 5, **caractérisé en ce que** lors des étapes de désengagement, il comprend la réception d'un signal de demande de désengagement (PTO SW) par ladite unité (2) et ledit dispositif (1) avant que l'embrayage (4) soit ouvert et la génération du signal d'invalidation (PTO EN) par ladite unité (2).

7. Procédé selon la revendication 5, **caractérisé en ce que** lors des étapes de désengagement, il comprend la vérification, par ladite unité (2), de la présence d'au moins une condition prédéfinie pour le désengagement forcé, avant que l'embrayage (4) soit ouvert et que le signal d'invalidation (PTO EN) soit généré.

8. Procédé selon la revendication 6 ou 7, **caractérisé en ce que** lors des étapes de désengagement, il comprend la commande, lorsqu'un intervalle de temps approprié (T9) s'est écoulé après l'engagement ou le désengagement de la prise de force, d'une condition bloquée lors de la génération du signal de demande (PTO SW) et, si ladite condition est présente, le fait d'empêcher tout autre engagement de la prise de force jusqu'après une procédure de redémarrage.

9. Procédé selon la revendication 8, comprenant, lors des étapes de désengagement, si ladite condition bloquée est présente, le désengagement de la prise de force.

10. Système commandant une prise de force et une boîte de vitesses automatique à engrenages étagés pour un véhicule, comprenant des moyens mettant en oeuvre le procédé de l'une quelconque des revendications précédentes.

11. Véhicule équipé d'un système selon la revendication 10.

12. Programme informatique effectuant le procédé selon l'une quelconque des revendications 1 à 9, lorsqu'exécuté sur un ordinateur.
